(19) Europäisches Patentamt
European Patent Office
Office européen des brevets

(11) Numéro de publication: **0 338 926**
**A1**

(12) **DEMANDE DE BREVET EUROPEEN**

(21) Numéro de dépôt: **89401093.3**

(22) Date de dépôt: **19.04.89**

(51) Int. Cl.⁴: **H 02 J 7/14**

(30) Priorité: **19.04.88 FR 8805163**

(43) Date de publication de la demande:
**25.10.89 Bulletin 89/43**

(84) Etats contractants désignés: **DE SE**

(71) Demandeur: **EQUIPEMENTS ELECTRIQUES MOTEUR**
**2, Rue André Boulle**
**F-94000 Creteil (FR)**

(72) Inventeur: **Canitrot, Didier**
**69, avenue de Bretagne**
**F-95410 La Queue en Brie (FR)**

**Ducrot, Christian**
**12, Square Esquirol**
**F-94000 Creteil (FR)**

**Terasse, Jean-François**
**11, Allée Chabier**
**F-91200 Athis Mons (FR)**

(74) Mandataire: **Martin, Jean-Jacques et al**
**Cabinet REGIMBEAU 26, Avenue Kléber**
**F-75116 Paris (FR)**

(54) **Dispositif d'alimentation électrique sous tension élevée du circuit auxiliaire d'un véhicule automobile.**

(57) L'invention concerne un dispositif d'alimentation électrique sous tension élevée d'un circuit auxiliaire CA d'un véhicule automobile.

Le dispositif comprend un alternateur 1 à deux enroulements stators identiques 11 et 12 connectés chacun à un pont redresseur 13 et 14 délivrant une tension alternateur redressée sur une borne B+1, B+2, un régulateur d'excitation 2 permettant de réguler le courant d'excitation de l'enroulement inducteur de l'alternateur et des moyens de commutation parallèle-série/série-parallèle des enroulements stators. Des bornes de sortie alternateur B+1, B+2 sont prévues pour engendrer une tension de valeur nominale ou une tension élevée. Une logique de commande est interconnectée au régulateur d'excitation 2 et aux moyens de commutation 3 pour assurer la mise en route du régime de tension élevée de manière conditionnelle aux paramètres d'état du véhicule tels que la vitesse du moteur, la position de l'embrayage, la température du véhicule, et la tension d'alimentation du dispositif.

Applications à l'alimentation électrique des circuits auxiliaires de véhicules automobiles utilitaires ou personnels et en particulier au dégivrage de parebrise.

FIG.1a

## Description

## DISPOSITIF D'ALIMENTATION ELECTRIQUE SOUS TENSION ELEVEE DU CIRCUIT AUXILIAIRE D'UN VEHICULE AUTOMOBILE

La présente invention concerne un dispositif d'alimentation électrique sous tension élevée du circuit auxiliaire d'un véhicule automobile.

Les véhicules automobiles actuels, qu'il s'agisse de véhicules poids lourds ou de véhicules personnels, tendent à consommer de plus en plus d'énergie électrique, en vue notamment d'améliorer le confort d'utilisation de ces derniers dans des conditions climatiques défavorables par exemple.

Afin d'assurer une recharge correspondante des batteries d'accumulateurs équipant ces véhicules, on a récemment proposé d'équiper les réseaux électriques de ces véhicules d'alternateurs polyphasés comportant deux enroulements stators identiques. Ces enroulements stators sont connectés en parallèle ou en série afin, en fonction de la vitesse de rotation du rotor de l'alternateur, d'augmenter, de manière significative, la puissance électrique délivrée par l'alternateur à deux enroulements à la batterie. De tels alternateurs à deux enroulements sont actuellement disponibles dans le commerce et ne seront donc pas décrits en détail.

Si l'augmentation de puissance électrique ainsi obtenue permet d'assurer de meilleures conditions de recharge de la batterie à la tension nominale de celle-ci, voisine de 14 V, l'utilisation de ce type d'alternateur répond mal à la création, à bord de ces véhicules de fonctions nouvelles, telles que par exemple le chauffage rapide d'un élément essentiel de conduite du véhicule, tel que le parebrise ou la lunette arrière, en vue du dégivrage ou du désembuage de ces derniers. De telles fonctions impliquent l'appel d'une puissance électrique très importante, voisine ou supérieure à 1 000 W, pendant une durée de quelques minutes.

La présente invention vise à remédier aux inconvénients précités par la mise en oeuvre d'un dispositif d'alimentation électrique sous tension élevée du circuit auxiliaire d'un véhicule automobile, le régime de tension élevée présentant un caractère temporaire.

Un autre objet de la présente invention est la mise en oeuvre d'un dispositif d'alimentation sous tension élevée permettant d'engendrer l'alimentation en régime de tension élevée conditionnellement à des paramètres d'état du véhicule tels que notamment régime de ralenti du moteur, vitesse nulle du véhicule, température extérieure ou intérieure du véhicule.

Le dispositif d'alimentation électrique sous tension élevée d'un circuit auxiliaire d'un véhicule automobile selon l'invention est remarquable en ce qu'il comporte un alternateur à deux enroulements stator identiques. Chaque enroulement stator est connecté à un pont redresseur délivrant une tension alternateur redressée sur une borne de sortie alternateur correspondante. Un régulateur d'excitation permet de réguler le courant d'excitation de l'enroulement inducteur de l'alternateur. Des moyens de commutation parallèle-série/série-parallèle des bornes de sortie alternateur sont prévus pour engendrer une tension d'alimentation de valeur nominale, lors de la commutation en parallèle, ou une tension d'alimentation en régime de tension élevée, lors de la commutation série. Une logique de commande interconnectée au régulateur d'excitation et aux moyens de commutation permet d'assurer la mise en route conditionnelle du régime de tension élevée par commutation en série des bornes, les moyens de commutation comportant une borne de sortie permettant de délivrer la tension d'alimentation de valeur nominale ou la tension d'alimentation en régime de tension élevée.

L'invention trouve application à l'industrie automobile pour l'équipement de véhicules personnels ou utilitaires.

L'invention sera mieux comprise à la lecture de la description ci-après et à l'observation des dessins dans lesquels :

- la figure 1a représente un schéma général du dispositif d'alimentation électrique en tension élevée du circuit auxiliaire d'un véhicule automobile selon l'invention,

- la figure 1b représente notamment un mode de réalisation non limitatif des moyens de commutation parallèle-série/série-parallèle du dispositif selon l'invention tel que représenté en figure 1a,

- la figure 2 représente un schéma détaillé d'un mode de réalisation avantageux non limitatif de la logique de commande du dispositif selon l'invention tel que représenté en figure 1a ou 1b.

- la figure 3 représente un organigramme d'état du dispositif selon l'invention, en particulier compte-tenu du mode de réalisation de la logique de commande telle que représentée en figure 2.

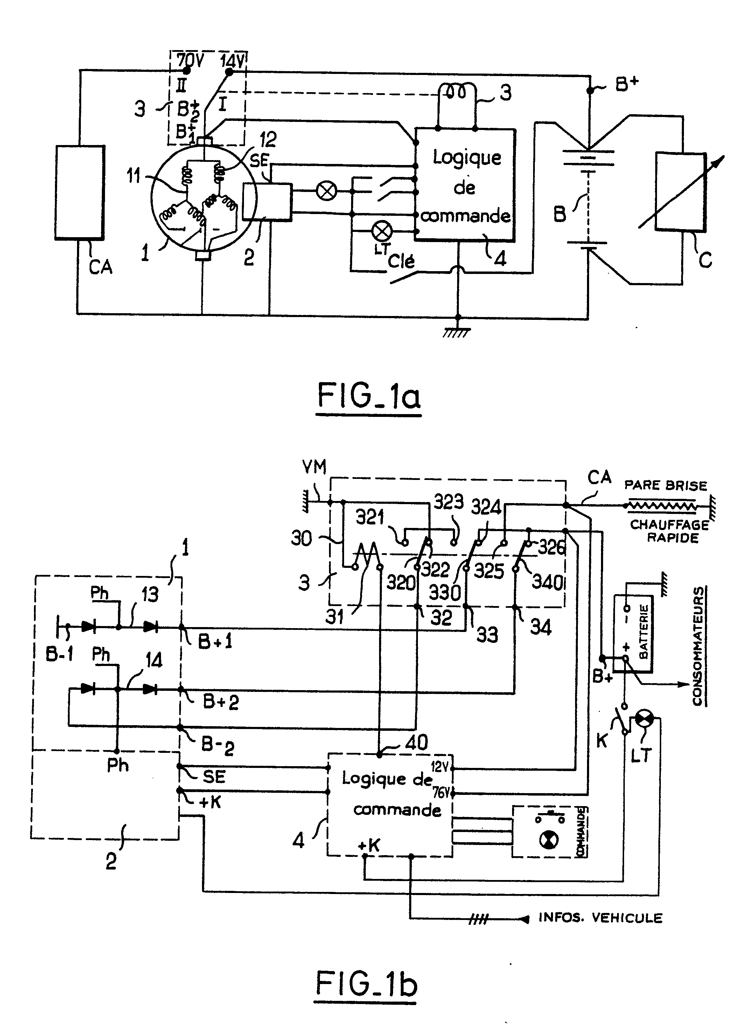

Le dispositif d'alimentation électrique sous tension élevée du circuit auxiliaire d'un véhicule automobile sera tout d'abord décrit en liaison avec les figures 1a et 1b.

Sur la figure 1a, on a représenté, de manière générale, un dispositif d'alimentation électrique sous tension élevée d'un circuit auxiliaire noté CA d'un véhicule automobile conforme à l'objet de la présente invention. Ce dispositif est remarquable en ce qu'il comprend notamment un alternateur noté 1 à deux enroulements stator identiques, ces enroulements stators étant notés 11 et 12.

Ainsi qu'on l'a en outre représenté en figure 1b notamment, chaque enroulement stator est connecté à un pont redresseur noté 13, 14 respectivement délivrant une tension alternateur redressée sur une borne de sortie alternateur correspondante notée B + 1 respectivement B + 2. Bien entendu, les ponts redresseurs 13 et 14 ne sont pas représentés en figure 1a afin de ne pas surcharger le dessin.

Sur la figure 1a précitée on remarquera en outre la présence d'un régulateur d'excitation 2 permettant de réguler le courant d'excitation de l'enroulement inducteur de l'alternateur 1. Ce type d'alternateur, ainsi que précédemment mentionné dans la description, étant normalement disponible dans le commerce, une représentation détaillée de l'alternateur et du régulateur d'excitation n'a pas été effectuée.

Ainsi qu'on le remarquera en outre en figures 1a et 1b, des moyens 3 de commutation parallèle-série/série-parallèle des bornes de sortie alternateur B+1 et B+2 sont prévues pour engendrer une tension d'alimentation de valeur nominale lors de la commutation en parallèle B+1 et B+2 précitées. Une tension d'alimentation en régime de tension élevée est par contre engendrée lors de la commutation en série des bornes de sortie alternateur B+1 et B+2.

En outre, une logique de commande 4 permet de commander en fonction de différents paramètres ainsi qu'il sera décrit plus en détail ci-après dans la description la commutation parallèle-série/série-parallèle précédemment mentionnée. La logique de commande 4 est interconnectée au régulateur d'excitation 2 et aux moyens de commutation 3 pour assurer la mise en route conditionnelle du régime de tension élevée par commutation en série des bornes de sortie alternateur correspondantes B+1 et B+2. Ainsi qu'on l'a représenté de manière schématique en figure 1a, les moyens de commutation 3 comportent en fait une borne de sortie permettant de délivrer la tension d'alimentation de valeur nominale lorsque les moyens de commutation sont en position notée I ainsi que représenté sur la figure 1a, cette tension nominale étant égale par exemple à 14 Volts pour assurer la recharge de la batterie B par interconnexion par l'intermédiaire d'une borne batterie notée B+. Au contraire, lorsque les moyens de commutation sont en position de commutation notée II, l'alternateur 1, du fait de la commutation en série des enroulements stators 11 et 12, permet au contraire de délivrer, de par son fonctionnement, une tension beaucoup plus élevée, de l'ordre de 70 Volts par exemple, à la charge auxiliaire notée CA. Sur cette même figure 1a on notera à titre d'exemple que la charge habituelle du réseau d'alimentation en énergie électrique du véhicule est notée C, celle-ci étant connectée entre la tension du véhicule notée VM et la borne B+ de la batterie B.

Dans le cas de véhicules utilitaires ou de véhicules personnels, le circuit auxiliaire CA peut avantageusement être constitué par un élément résistif de chauffage rapide du parebrise du véhicule en vue du dégivrage de celui-ci. Dans ce cas, l'élément résistif de chauffage rapide peut être constitué par une feuille de matériau résistif insérée entre le feuilletage du parebrise.

Ainsi qu'on l'a représenté plus en détail en figure 1b, la logique de commande 4 permet d'engendrer sur une borne de sortie 40 un signal de mise en route du chauffage rapide conditionnellement à des valeurs de paramètres d'état du véhicule automobile. Ces paramètres d'état du véhicule automobile peuvent par exemple être la vitesse nulle du véhicule, la position du système d'embrayage au point mort. Dans ce dernier cas, la position au point mort du système d'embrayage du véhicule peut être avantageusement détectée par un sytème détecteur non représenté au dessin. Bien entendu, les paramètres d'état du véhicule peuvent également être constitués par des paramètres de l'environnement atmosphérique de ce dernier, ces paramètres pouvant alors être constitués par la température extérieure, voire la température intérieure du véhicule par rapport à une valeur de référence.

Sur la figure 1b, on a représenté plus en détail l'interconnexion de la logique de commande 4 avec d'une part le régulateur 2 et les moyens de commutation parallèle-série/série-parallèle 3 des bornes de sortie alternateur B+1 et B+2.

Ainsi qu'on pourra le constater sur la figure 1b précitée, les moyens de commutation 3 comportent par exemple un relais de commutation de puissance 30 dont la bobine excitatrice 31 est connectée entre la tension de référence notée VM ou masse du véhicule et la borne de sortie 40 de la logique de commande 4.

A titre d'exemple non limitatif, le relais de commutation de puissance 30 peut comporter trois bornes d'entrée 32, 33, 34, trois lames de contact 320, 330, 340 et six bornes de commutation, ces bornes de commutation étant notées 321, 322, 323, 324, 325, 326.

En l'absence d'excitation de la bobine excitatrice 31, c'est-à-dire en fonctionnement de l'alternateur en régime de tension nominal, les lames de contact précitées notées 320, 330, 340, assurent respectivement le contact entre la première borne d'entrée 32 et la deuxième borne de commutation 322, le contact entre la deuxième borne d'entrée 33 et la quatrième borne de commutation 324, le contact entre la troisième borne d'entrée 34 et la sixième borne de commutation 326. En outre, les première 321, troisième 323, respectivement quatrième 324 et sixième 326 bornes de commutation sont interconnectées entre elles et les quatrième 324, sixième 326 bornes de commutation sont connectées à une borne d'entrée des moyens de commutation, cette borne d'entrée étant reliée à la borne positive B+ du véhicule. La deuxième 322 et la cinquième 325 borne de commutation sont respectivement connectées à la masse du véhicule VM et au circuit auxiliaire CA constituant circuit de chauffage rapide pour le véhicule. Les lames de contact 320, 330, et 340 assurent respectivement en présence d'excitations de la bobine excitatrice 31, c'est-à-dire lors du fonctionnement de l'alternateur en régime de tension élevée par commutation des enroulements stator en série le contact entre la première borne d'entrée 32 et la première borne de commutation 321, le contact entre la deuxième borne d'entrée 33 et la deuxième borne de commutation 323, le contact entre la troisème borne d'entrée 34 et la cinquième borne de commutation 325. La première borne d'entrée 32 est reliée à la borne de sortie alternateur redressée négative notée B-2 de l'un des enroulements stator. La deuxième borne d'entrée 33 est reliée à la borne de sortie alternateur positive B+1 de l'autre enroulement stator de l'alternateur et la troisième borne d'entrée 34 est reliée à la borne de sortie alternateur redressée B+2 de l'enroulement stator, la borne de sortie alternateur redressée négative B-1 de l'autre enroulement stator étant connectée à la masse VM du véhicule. Ainsi, la cinquième borne de commutation 325 délivre sur commutation série la tension délivrée par l'alternateur en régime de tension élevée.

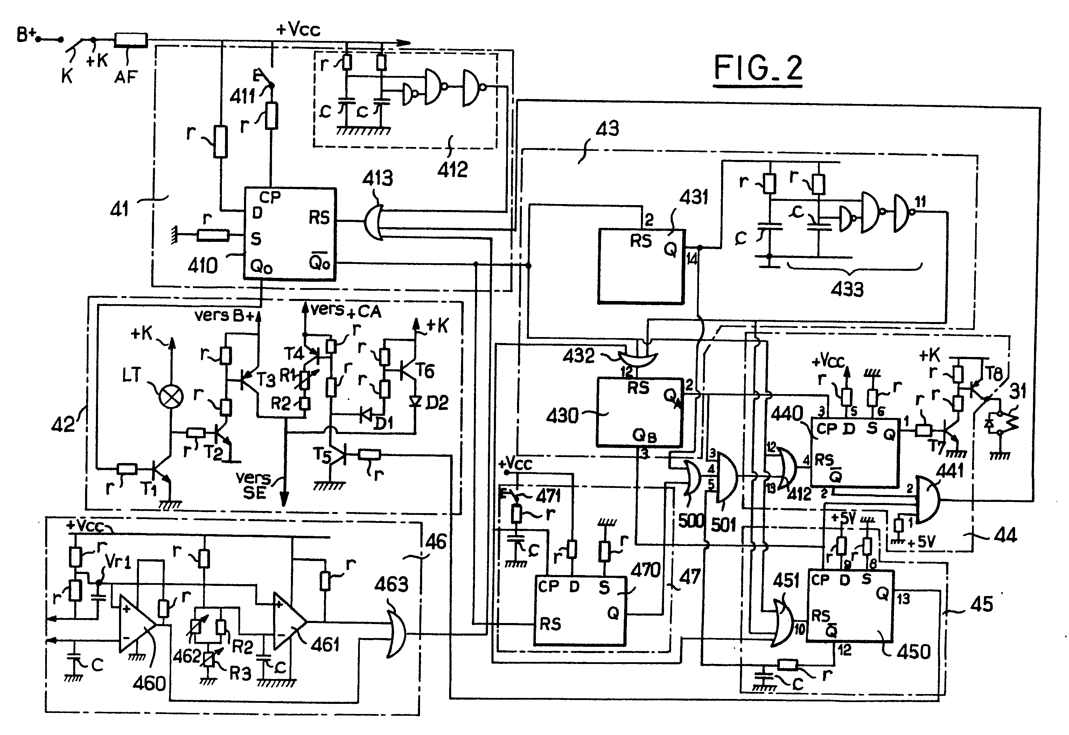

Une description plus détaillée de la logique de commande sera donnée maintenant en liaison avec la figure 2.

Ainsi qu'on l'a représenté sur la figure 2 précitée, la logique de commande 4 comporte un circuit 41 d'entrée de commande de mise en route d'alimentation en tension élevée, un circuit 42 de commande d'entrée de la tension alternateur redressée sur le régulateur, un circuit 43 de comptage d'une durée prédéterminée de maintien en fonctionnement de l'alimentation en régime de tension élevée, un circuit 44 de sortie de commande des moyens de commutation parallèle-série/série-parallèle. Bien entendu, la logique de commande peut également comporter d'autres circuits, lesquels seront décrits ultérieurement dans la description.

Par convention, sur la figure 2 on a représenté un mode de réalisation non limitatif des différents circuits précédemment énumérés 41 à 45. Ce mode de réalisation peut être exécuté à partir de composants électroniques normalement disponibles dans le commerce et par convention on désigne par r toute résistance destinée à assurer la mise en oeuvre ou la polarisation de ces composants et par c toute capacité ou condensateur de valeur déterminée destiné à assurer soit la liaison soit le découplage de bornes déterminées de ces composants. bien entendu, on comprendra que les valeurs respectives de ces résistances r ou capacités c sont différentes bien que le symbole les désignant soit identique. ces éléments ne jouant à proprement parler aucune fonction particulière vis-à-vis de ces composants si ce n'est celle de leur mise en oeuvre ou alimentation selon les spécifications indiquées par le détaillant fournisseur de ces composants.

Sur la figure 2, ainsi qu'on pourra le remarquer, la borne B+ de la batterie est reliée par l''intermédiaire de la clé de contact du véhicule noté K à une borne notée +K commandée par la clé de contact. A la borne +K de la clé de contact est connecté un circuit d'alimentation filtrage noté AF délivrant à sa sortie une tension d'alimentation continue notée +Vcc. laquelle permet d'assurer par exemple l'alimentation en énergie électrique des différents composants électroniques précités. La tension d'alimentation +Vcc peut par exemple avoir pour valeur 5 ou 6 Volts.

Ainsi qu'on l'a représenté en figure 2, le circuit 41 d'entrée de commande de mise en route d'alimentation sous tension élevée comporte à titre d'exemple non limitatif un circuit bascule bistable noté 410 enclenché par une bouton poussoir de mise en marche noté 411. La bascule bistable 410 peut avantageusement être constituée par un circuit intégré numéro 4013 commercialisé par la Société MOTOROLA. Le circuit 41 d'entrée de commande de mise en route d'alimentation en tension élevée comporte également un circuit de remise à zéro 412 de l'ensemble de la logique à la fermeture de la clé de contact K, lequel est constitué par trois portes NON-ET conectées en cascade, une entrée de la première et de la deuxième porte NON-ET étant connectées à un circuit à résistance r capacité c de constante de temps déterminée.

La sortie de la dernière porte NON-ET constituant le circuit de remise à zéro 412 est reliée à l'entrée notée RS de la bascule bistable 410 par l'intermédiaire d'une porte OU à trois entrées 413. Ainsi la bascule bistable 410 est reliée au bouton poussoir de marche 411 par son entrée notée CP, l'entrée de basculement notée S étant reliée par une résistance r à la tension de masse VM du véhicule et l'entrée de rebasculement RS étant relié à la sortie de la porte OU 413 précitée. Sur actionnement du bouton poussoir de marche 411, les sorties $\overline{Q0}$ et Q0 délivrent des niveaux logiques par passage de leur niveau haut de tension à leur niveau bas de tension et réciproquement.

Ainsi qu'on l'a représenté en outre en figure 2, le circuit 42 de commande d'entrée de la tension alternateur redressée sur le régulateur comporte des moyens de commutation constitués par des transistors T1, T2, T3 permettant lors de la mise en marche de l'alimentation en tension élevée par l'intermédiaire du bouton poussoir de marche 411 et du signal délivré par la bascule 410 sur sa sortie Q0, la coupure de la tension alternateur redressée délivrée au régulateur sur blocage du transistor T3. En l'absence d'actionnement du bouton poussoir de marche 411 et de signal correspondant sur la sortie Q0 de la bascule 410, le transistor T3 est normalement conducteur et délivre à l'entrée de tension alternateur redressée du régulateur, c'est-à-dire sur l'entrée notée SE du régulateur la tension batterie délivrée par la borne B+ de celle-ci. On notera que les transistors T1, T2 et T3 sont montés en cascade, le transistor T3 constituant ainsi étage de sortie permettant d'appliquer la tension nominale de batterie délivrée par la borne B+ sur l'entrée SE du régulateur.

En outre, le circuit de commande d'entrée de la tension alternateur redressée 42 sur le régulateur comporte des moyens de commutation constitués par les transistors T4, T5, T6. La borne de collecteur du transistor T1 est reliée à la borne +K de la clé de contact, c'est-à-dire à la borne B+ de la batterie lorsque la clé de contact K est actionnée, cette liaison étant effectuée par l'intermédiaire d'une lampe témoin LT. Le transistor T2 est monté en émetteur commun et le transistor T3 est constitué par un transistor de type complémenté soit, dans l'exemple de réalisation représenté en figure 2, par un transistor PNP dont l'émetteur est directement relié à la borne B+ précitée, le collecteur étant relié à la borne d'entrée SE du régulateur. De la même façon, les transistors T5 et T4 sont montés en cascade, le transistor T4 étant constitué par un transistor PNP dont l'émetteur est relié à la borne de branchement de la charge auxiliaire CA, le collecteur de ce même transistor T4 etant relié à la borne d'entrée SE du régulateur par l'intermédiaire d'une résistance ajustable R1 et d'une résistance ballast R2. La base du transistor T4 est reliée au collecteur du transistor T5, lequel, constitué par un transistor NPN, a son collecteur relié à la tension de masse VM du dispositif. La base du transistor T6 est reliée au collecteur du transistor T5 par l'intermédiaire d'une première diode D1 polarisée en direct et le collecteur du transistor T6 est relié à la borne d'entrée SE du régulateur par l'intermédiaire d'une diode D2 polarisée dans le sens passant. Les transistors T4, T5, T6 permettent sur commande de saturation du transistor T5 et du transistor T4 de délivrer une tension alternateur redressée réduite, la tension sur la borne d'alimentation de la charge auxiliaire +CA atteignant la valeur de la tension en régime de tension élevée, soit 70 Volts, par l'intermédiaire des résistances chutrices de tension R1, R2, la valeur de la tension alternateur redressée au point SE correspondant sensiblement à celle de la tension alternateur redressée en régime nominal.

En outre, le circuit 45 de commande d'entrée de la tension alternateur redressée sur le régulateur comporte une bascule bistable 450 formée par un circuit intégré commercialisé sous la référence 4013 par la société MOTOROLA. La bascule bistable 450 est déclenchée après temporisation suite à l'actionnement du bouton poussoir de marche 411 ainsi qu'il sera décrit ultérieurement dans la description, la sortie de commande Q de la bascule 450 permettant de commander la commutation du transistor T5 du circuit de commande d'entrée 42 de la tension alternateur redressée sur le régulateur. Le circuit 45 de commande d'entrée de la tension alternateur redressée sur le régulateur comporte outre la bascule bistable 450 une porte OU à trois entrées 451 dont la sortie est connectée à la borne de rebasculement RS de la bascule 450, la borne de basculement S étant reliée à la tension de masse par l'intermédiaire d'une résistance.

Afin d'assurer la commande de mise en marche du chauffage rapide, dans de bonnes conditions, le circuit 43 de comptage d'une durée prédéterminée et de maintien en fonctionnement de l'alimentation en tension élevée comporte ainsi que représenté en figure 2, un premier circuit de temporisation 430 permettant, après une première temporisation notée τ1 de durée déterminée, l'enclenchement des moyens de commutation par excitation de la bobine excitatrice. Le premier circuit de temporisation permet suite à une deuxième temporisation τ2 la commande à saturation des transistors T4, T5, T6 du circuit de commande d'entrée 42 de la tension alternateur redressée sur le régulateur.

A titre d'exemple non limitatif, ainsi qu'on l'a représenté en figure 2, le premier cicuit de temporisation 430 est constitué par un circuit intégré commercialisé sous la référence 4060 par la Société MOTOROLA. Ce circuit intégré est constitué d'un ensemble de bascules dont l'entrée de rebasculement RS commune est connectée à la sortie d'une porte OU 431 à trois entrées, la sortie QB de la bascule ainsi constituée et formant le premier circuit de temporisation 430 étant reliée à l'entrée CP de la bascule bistable 450 constituant le circuit 45 de commande d'entrée de la tension alternateur redressée sur le régulateur.

En outre, un deuxième circuit de temporisation 431 est prévu pour constituer le circuit 43 de comptage de durée prédéterminée de maintien en fonctionnement de l'alimentation en tension élevée.

Ce deuxième circuit de temporisation 431 permettant de définir la durée de maintien de l'alimentation en tension élevée sur une durée d'alimentation τ3. Il permet à la fin de cette durée τ3 la remise à zéro du premier circuit de temporisation 430 via l'ensemble 433 et l'arrêt de l'alimentation en tension élevée suivant un cycle réutilisant les premières temporisations τ1, τ2 pour obtenir la commutation du relai 30 en l'absence de courant dans les contacts. Le deuxième circuit de temportisation 431 peut être constitué par un circuit intégré commercialisé sous la référence 4521 par la Société MOTOROLA. L'entrée de rebasculement RS du circuit intégré précité est relié à la sortie $\overline{Q0}$ de la bascule bistable 410 du circuit 41 d'entrée de commande de mise en route d'alimentation en tension élevée. La sortie Q du circuit intégré constituant deuxième circuit de temporisation 431 est reliée à l'entrée RS du premier circuit de temporisation 430 par l'intermédiaire d'une part d'une porte OU à trois entrées 432 et d'un circuit de mise en forme de signal 433 constitué par trois portes NON-ET montées en cascade, les deux premières portes NON-ET ayant une de leurs entrées connectées à un circuit à résistance capacité de type intégrateur, ces circuits à résistance capacité étant eux-mêmes reliés à la sortie Q du deuxième circuit de temporisation 431.

Ainsi qu'on l'a en outre représenté en figure 2, le circuit 44 de sortie de commande des moyens de commutation parallèle-série/série-parallèle comporte une bascule bistable 440 laquelle reçoit du premier circuit de temporisation 430 un signal de commande. Ce signal de commande est constitué par le signal délivré par la sortie QA du premier circuit de temporisation 430, cette sortie étant reliée à l'entrée CP du circuit bistable 440. Le circuit bistable 440 peut être constitué avantageusement par un circuit intégré commercialisé sous la référence 4013 par la Société MOTOROLA. La borne d'entrée de basculement S de ce circuit bistable est connectée à la tension de masse par une résistance r et la borne de rebasculement RS est connectée à la sortie $\overline{Q0}$ de la bascule bistable 410 par l'intermédiaire d'une porte OU à deux entrées 442. La borne de sortie Q est connectée à une deuxième entrée de la porte OU 413 à trois entrées du circuit 41 d'entrée de commande de mise en route d'alimentation en tension élevée par l'intermédiaire d'une porte ET à trois entrées 441. La borne de sortie Q de la bascule bistable 440 est connectée à un circuit de puissance constitué par deux transistors T7 et T8. Le transistor T8 est par exemple un transistor PNP dont l'électrodede collecteur est directement relié à la borne +K de la clé de contact K du véhicule et dont le collecteur est directement chargé par l'enroulement d'excitation 31 ou bobine excitatrice du relais des moyens de commutation parallèle-série/série-parallèle. Le transistor T7 est constitué par un transistor NPN dont l'émetteur est connecté à la tension de masse VM du véhicule et dont le collecteur est relié par l'intermédiaire de résistances de polarisation r à la borne +K de la clé de contact du véhicule, la base du transistor T8 étant reliée en un point intermédiaire du pont de résistances r précité. La base du transistor T7 est reliée à la sortie Q du circuit bistable 440.

En outre, ainsi qu'on l'a représenté en figure 2, la logique de commande 4 comporte également un ciruit 47 d'entrée de commande d'arrêt d'alimentation en tension élevée. Ainsi qu'on l'a représenté sur la figure précitée, ce circuit comporte avantageusement une bascule bistable notée 470 constituée par un circuit intégré commercialisé sous la référence 4013 par la Société MOTOROLA. L'entrée de rebasculement RS de ce circuit bistable 470 est connectée à la sortie $\overline{Q0}$ de la bascule bistable 410 du circuit 41 d'entrée de commande de mise en route d'alimentation en tension élevée. L'entrée de basculement S de la bascule bistable 470 est reliée à la tension de masse du dispositif par une résistance de polarisation r et l'entrée CP de la bascule bistable 470 est reliée à un bouton poussoir d'arrêt noté 471 par l'intermédiaire d'une résistance r de polarisation et d'un condensateur de découplage noté c. La liaison entre le circuit de comptage 43 d'une durée prédéterminée, le circuit 44 de sortie de commande des moyens de commutation parallèle-série/série-parallèle, le circuit 45 de commande d'entrée de la tension alternateur redressée sur le régulateur et le circuit 47 de commande d'arrêt d'alimentation de tension élevée est réalisée par l'intermédiaire d'une porte OU 500 et d'une porte ET 501. La porte OU 500 reçoit sur une première entrée la sortie Q de la bascule bistable 470 et sur une deuxième entrée la sortie Q de la bascule bistable 431 constituant deuxième moyen de temporisation. La sortie de la porte OU 500 est connecteé à l'une des entrées de la porte ET 501 à trois entrées. Une autre entrée de la porte ET 501 est connectée à la borne de sortie QA de la bascule 430 constituant premier moyen de temporisation. La dernière entrée de la porte ET 501 est elle-même reliée à la sortie $\overline{Q}$ de la bascule monostable 450 du circuit 45 de commande d'entrée de la tension alternateur redressée sur le régulateur par l'intermédiaire d'un circuit à résistance capacité de type intégrateur noté rc. La sortie de la porte ET 501 est reliée à une entrée de la porte OU 442 dont la sortie est elle-même reliée à l'entrée de l'entrée de rebasculement RS de la bascule bistable 440 du ciruit 44 de sortie de commande des moyens de commutation parallèle-série/série-parallèle.

Ainsi qu'on l'a représenté en figure 2, la logique de commande 4 comporte en outre un circuit 46 de détection de température et de régime de vitesse moteur. Ce circuit comprend avantageusement un premier comparateur 460 recevant sur une borne positive une tension de référence Vr1 et sur sa borne négative une tension représentative de la tension minimale de fonctionnement. La sortie du premier comparateur 460 est connectée à une porte OU 463 dont la sortie est elle-même connectée à la troisième porte OU 413 du circuit 41 d'entrée de commande et de mise en route d'alimentation en tension élevée. Le circuit 46 de détection de température comporte en outre un deuxième comparateur 461 recevant sur une borne positive la tension de référence Vr1 et sur sa borne négative une tension représentative de la température ambiante ou de la température interne du véhicule à partir d'un pont résistif comportant une résistance à coefficient de température 462 et des résistances de calibrage R2 et R3. La sortie du comparateur 461 formant deuxième comparateur est reliée à une autre entrée de la porte OU 463.

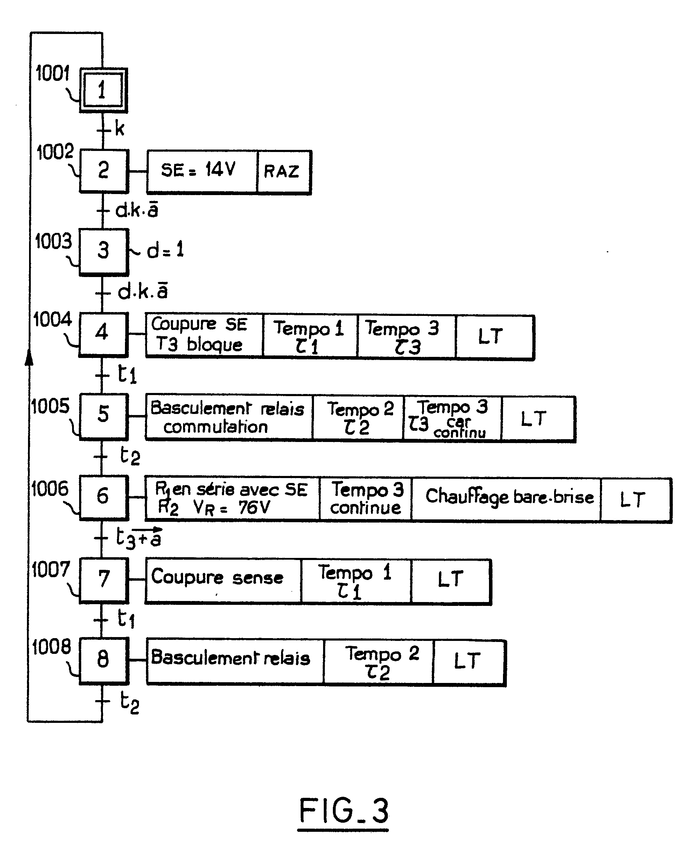

Le fonctionnement de la logique de commande tel que représenté en figure 2 sera décrit en liaison avec la figure 3.

Sur la figure 3 les lettres a, d, k désignent respectivement les variables fonctionnelles a arrêt de dégivrage ou de chauffage rapide, d demande de dégivrage ou de chauffage rapide, k actionnement de la clé de contact du véhicule, les lettres ou variables complémentées représentant bien entendu l'absence de ces états.

La position 1001 représente la position initiale selon laquelle le véhicule est arrêté en l'absence de toute demande de chauffage rapide. Suite à la fermeture de la clé de contact K, la position 1002 représente l'état suivant selon lequel le véhicule est à l'arrêt mais le moteur du véhicule étant démarré. Dans cette position, le transistor T3 alors conducteur par l'intermédiaire des transistors T1 et T2, la borne SE du régulateur reçoit la tension délivrée par la borne B+ de la batterie. Le circuit de remise à zéro 412 engendre une impulsion, laquelle est transmise dans la porte OU 413 et provoque la remise à zéro de la bascule 410, le transistor T3 étant toujours bien entendu maintenu en état de conduction. Sur demande de chauffage rapide ou de dégivrage, la position 1003 est atteinte, la variable d étant égale à 1, par actionnement du bouton poussoir de marche 411. Suite à la position précitée, la position 1004 est atteinte dans laquelle sur basculement de la bascule bistable 410 et par l'intermédiaire du transistor T1 et du transistor T2, le transistor T3 est bloqué, ce qui a pour effet de couper la tension sur l'entrée SE du régulateur. La lampe témoin LT commandée par le transistor T1 s'allume pour indiquer la mise en marche du circuit de chauffage rapide. Les deux circuits de temporisation 430 et 431 commencent à décompter respectivement la première temporisation τ1 égale par exemple à 400 millisecondes et la troisième tremporisation τ3 égale par exemple à 5 minutes, durée du chauffage rapide.

A la fin de la première temporisation de durée τ1, laposition 1005 est atteinte, la sortie Q du premier circuit de temporisation 430 entraînant par l'intermédiaire de la bascule 440 l'alimentation de la bobine excitatrice 31 et donc l'enclenchement du relais de commutation parallèle-série/série-parallèle. Le premier circuit de temporisation 430 permet suite à une deuxième temporisation τ2 égale par exemple à 400 millisecondes, d'effectuer la commande à saturation des transistors T4, T5, T6 du circuit de commande de la tension alternateur redressée sur le régulateur, cette position étant atteinte en 1006 où les résistances R1, R2 sont alors connectées en série avec la borne d'entrée SE du régulateur, la tension délivrée par l'alternateur étant alors égale à 70 Volts. Bien entendu, pendant les positions 1005 et 1006 atteintes, la temporisation τ3 permettant de définir la durée de maintien de l'alimentation en tension élevée est décomptée par le deuxième circuit de temporisation 431. On comprendra que la connexion des résistances R1 et R2 en série avec la borne d'entré SE du régulateur a pour effet de permettre le fonctionnement correspondant de l'alternateur en régime de tension élevée, la tension appliquée à la borne d'entrée SE du régulateur étant voisine de la tension nominale de 14 Volts du fait de la chute de tension dans les résistances R1 et R2. Cependant, la tension délivrée par l'alternateur est égale à 70 Volts et la charge auxiliaire CA du véhicule est ainsi soumise au régime dit de chauffage rapide. En fin de temporisation τ3, le deuxième circuit de temporisation 431 délivre son information de basculement, laquelle est transformée en impulsions par le circuit 433, ce qui a pour effet de remettre à zéro le premier circuit de temporisation 430 ainsi que le circuit 45 de commande d'entrée de la tension alternateur redressée sur le régulateur par l'intermédiaire de la bascule 450. Cette position est atteinte sur la figure 3 en 1007 et le basculement de labascule bistable 450 précitée a pour effet de provoquer par l'intermédiaire du transistor T5 et du transistor T4 la coupure du circuit connecté à la borne d'entrée SE du régulateur. Le circuit de temporisation 430 préalablement remis à zéro par le deuxième circuit de temporisation 431 au bout de la temporisation τ3 égale à 500 minutes délivre sur sa borne de sortie QB une tension de basculement, laquelle par l'intermédiaire de la porte OU 441 et de la porte OU 413 a pour effet d'effectuer une remise à zéro du circuit bistable 410. Le branchement direct de la borne SE d'entrée de la tension alternateur sur le régulateur est alors effectué sur la borne B+ de la batterie par l'intermédiaire du transistor T1, la coupure de l'alimentation de la bobine d'excitation 31 ayant été préalablement faite par la remise à zéro du circuit bistable 440 et cette position étant atteinte en position notée 1008 sur la figure 3.

On a ainsi décrit un dispositif d'alimentation électrique en tension élevée d'un circuit auxiliaire de véhicule automobile particulièrement performant dans la mesure où celui-ci permet d'assurer une alimentation en tension élevée dans des conditions optimales.

## Revendications

1. Dispositif d'alimentation électrique en tension élevée d'un circuit auxiliaire (CA) d'un véhicule automobile, caractérisé en ce qu'il comporte :
- un alternateur (1) à deux enroulements stator identiques, (11, 12) chaque enroulement stator étant connecté à un pont redresseur (13, 14) délivrant une tension alternateur redressée sur une borne de sortie alternateur correspondante (B+1, B+2),
- un régulateur d'excitation (2) permettant de réguler le courant d'excitation de l'enroulement inducteur de l'alternateur (1),
- des moyens (3) de commutation parallèle-série/série-parallèle desdites bornes de sortie alternateur (B+1, B+2) pour engendrer une tension d'alimentation de valeur nominale, lors de la commutation en parallèle, ou une tension d'alimentation en régime de tension élevée, lors de la commutation série,
- une logique de commande (4) interconnectée au régulateur d'excitation (2) et aux moyens de commutation (3) pour assurer la mise en route conditionnelle du régime de tension élevée par commutation en série des bornes de sortie alternateur correspondantes (B+1, B+2), lesdits moyens de commutation (3) comportant une borne de sortie permettant de délivrer la tension d'alimentation de valeur nominale ou la tension d'alimentation en régime de tension élevée.

2. Dispositif selon la revendication 1, caractérisé en ce que ledit circuit auxiliaire (CA) étant constitué par un élément résistif de chauffage rapide du pare brise du véhicule, en vue du dégivrage de celui-ci, ladite logique de commande (4) permet d'engendrer sur une borne de sortie (40) un signal de mise en route dudit chauffage rapide conditionnellement à des valeurs de paramètres d'état du véhicule automobile, tels que vitesse nulle .et système d'embrayage au point mort de celui-ci, ou de l'environnement atmosphérique de ce dernier, tel que la température extérieure par rapport à une valeur de référence.

3. Dispositif selon la revendication 1, caractérisé en ce que lesdits moyens de commutation (3) comportent un relai de commutation de puissance (30) dont la bobine excitatrice (31) est connectée entre la tension de référence VM ou masse et ladite borne de sortie (40) de ladite logique de commande, ledit relais comportant trois bornes d'entrée (32, 33, 34), trois lames de contact (320, 330, 340) et six bornes de commutation (321, 322, 323, 324, 325, 326), les lames de contact assurant respectivement, en l'absence d'excitation de la bobine excitatrice, le contact entre la première borne d'entrée (32) et la deuxième borne de commutation (322), la deuxième borne d'entrée (33) et la quatrième borne de commutation (324), la troisième borne d'entrée (34) et la sixième borne de commutation (326), les première (321) - troisième (323) respectivement quatrième (324) - sixième (326) bornes de commutation étant interconnectées entre elles et les quatrième (324) - sixième (326) bornes de commutation étant connectées à une borne d'entrée des moyens de commutation reliée à la borne positive B+ du véhicule, la deuxième (322) et la cinquième (325) borne de commutation étant respectivement connectée à la masse (VM) et au circuit auxiliaire (CA), lesdites lames de contact (320, 330, 340) assurant respectivement en présence d'excitation de la bobine excitatrice le contact entre la première borne d'entrée (32) et la première borne de commutation (321), la deuxième borne d'entrée (32) et la troisième borne de commutation (323), la troisième borne d'entrée (34) et la cinquième borne de commutation (325), la première borne d'entrée (32) étant reliée à la borne de sortie alternateur redressée négative (B-2) de l'un des enroulements stator, la deuxième borne d'entrée (33) étant reliée à la borne de sortie alternateur redressée positive (B+1) de l'autre enroulement stator et la troisième borne d'entrée (34) étant reliée à la borne de sortie alternateur redressée positive (B+2) de l'enroulement stator, la borne de sortie alternateur redressée négative (B-1) de l'autre enroulement stator étant connectée à la masse (VM), la cinquième borne de commutation (325) délivrant, sur commutation, la tension en régime de tension élevée.

4. Dispositif selon l'une des revendications précédentes, caractérisé en ce que la logique de commande comporte :
- un circuit (41) d'entrée de commande de mise en route d'alimentation en tension élevée,
- un circuit (42, 45) de commande d'entrée de la tension alternateur redressée sur le régulateur,
- un circuit (43) de comptage d'une durée prédéterminée de maintien en fonctionnement de l'alimentation en tension élevée,
- un circuit (44) de sortie de commande des moyens de commutation parallèle-série/série-parallèle.

5. Dispositif selon la revendication 4, caractérisé en ce que le circuit (41) d'entrée de commande de mise en route d'alimentation en tension élevée comporte :
- un circuit bascule bistable (410) enclenché par un bouton poussoir de marche (411),
- un circuit de remise à zéro (412) permettant la remise à zéro de l'ensemble de la logique.

6. Dispositif selon les revendications 4 et 5, caractérisé en ce que ledit circuit (42) de commande d'entrée de la tension alternateur redressée sur le régulateur comporte :
- des moyens de commutation transistors (T1, T2, T3) permettant, lors de la mise en marche de l'alimentation en tension élevée, par l'intermédiaire du bouton poussoir de marche (411), la coupure de la tension d'alternateur redressée délivrée au régulateur sur blocage du transistor (T3), normalement conducteur et délivrant à l'entrée de tension alternateur redressée du régulateur la tension de batterie délivrée par la borne (B$^+$),
- des moyens de commutation, transistors (T4, T5, T6), permettant, sur commande de saturation du transistor (T5) et saturation du transistor (T4) dont l'électrode d'émetteur est connectée à la borne d'alimentation du circuit auxiliaire (CA) et dont la borne de collecteur est connectée à la borne d'entrée (SE) de la tension alternateur redressée du régulateur par l'intermédiaire de résistances (R1, R2), de délivrer une tension alternateur redressée réduite dont la valeur correspond sensiblement à celle de la tension alternateur redressée en régime normal.

7. Dispositif selon les revendications 4 et 6, caractérisé en ce que ledit circuit (43) de comptage d'une durée prédéterminée de maintien en fonctionnement de l'alimentation en tension élevée comporte :
- un premier circuit de temporisation (430)

permettant, après une première temporisation (T1) de durée déterminée, l'enclenchement des moyens de commutation par excitation de la bobine excitatrice, ledit premier circuit de temporisation permettant, suite à une deuxième temporisation ($\tau$2), la commande à saturation des transistors (T4, T5, T6) du circuit de commande d'entrée de la tension alternateur redressée sur le régulateur,
- un deuxième circuit de temporisation (431) permettant de définir ladite durée de maintien de l'alimentation en tension élevée sur une durée ($\tau$3) permettant à la fin de ladite durée la remise à zéro du premier circuit de temporisation (430) et l'arrêt de l'alimentation en tension élevée suivant un cycle réutilisant les premières temporisations ($\tau$1) et ($\tau$2) pour obtenir la commutation du relai (30) en l'absence de courant dans les contacts.

8. Dispositif selon les revendications 4 et 7, caractérisé en ce que ledit circuit (44) de sortie de commande des moyens de commutation parallèle-série/série-parallèle comporte :
- une bascule bistable (440) recevant dudit premier circuit de temporisation (430) un signal de commande,
- un circuit de puissance transistors (T7, T8) commandé par ladite bascule, le circuit de puissance comportant une borne de sortie connectée à l'entrée d'excitation de la bobine excitatrice du relais des moyens de commutation parallèle-série/série-parallèle.

9. Dispositif selon les revendications 4 et 7, caractérisé en ce que ledit circuit (45) de commande d'entrée de la tension alternateur redressée sur le régulateur comporte une bascule (450) déclenchée après temporisation par le signal délivré par le premier moyen de temporisation (430), la sortie de commande (Q) de ladite bascule (450) permettant de commander la commutation dudit transistor (T5) du circuit de commande d'entrée de la tension alternateur redressée sur le régulateur.

10. Dispositif selon la revendication 4, caractérisé en ce que la logique de commande comporte en outre un circuit (46) de détection de temperature et de tension minimum de fonctionnement, ledit circuit comprenant :
- un premier comparateur (460) recevant sur sa borne positive une tension de référence Vr1 et sur sa borne négative une tension représentative de la tension minimum de fonctionnement,
- un deuxième comparateur (461) recevant sur une borne positive la tension de référence Vr1 et sur sa borne négative une tension représentative de la température ambiante à partir d'un pont resistif comportant une resistance à coefficient de température (462).

FIG_1a

FIG_1b

FIG_2

| 1001 | 1 | | | | |
|---|---|---|---|---|---|

$+ k$

| 1002 | 2 | SE = 14V | RAZ |
|---|---|---|---|

$+ d.k.\bar{a}$

| 1003 | 3 | $d = 1$ |
|---|---|---|

$+ d.k.\bar{a}$

| 1004 | 4 | Coupure SE T3 bloque | Tempo 1 $\tau_1$ | Tempo 3 $\tau_3$ | LT |
|---|---|---|---|---|---|

$+ t_1$

| 1005 | 5 | Basculement relais commutation | Tempo 2 $\tau_2$ | Tempo 3 $\tau_3$ car continu | LT |
|---|---|---|---|---|---|

$+ t_2$

| 1006 | 6 | $R_1$ en série avec SE $R_2$ $V_R = 76V$ | Tempo 3 continue | Chauffage bare-brise | LT |
|---|---|---|---|---|---|

$+ t_{3+\vec{a}}$

| 1007 | 7 | Coupure sense | Tempo 1 $\tau_1$ | LT |
|---|---|---|---|---|

$+ t_1$

| 1008 | 8 | Basculement relais | Tempo 2 $\tau_2$ | LT |
|---|---|---|---|---|

$+ t_2$

## FIG_3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4 ) |
|---|---|---|---|
| Y | EP-A-0246976 (DUCELLIER & CIE) <br> * colonne 3, ligne 42 - colonne 12, ligne 6; figures 1-6 * | 1 | H02J7/14 |
| A | | 2-10 | |
| Y | US-A-3469073 (T.A.ZECHIN) <br> * colonne 4, ligne 67 - colonne 5, ligne 58; figures 3, 4 * | 1 | |
| A | | 2-4 | |
| A | GB-A-1483033 (FORD MOTOR CO.,LTD) <br> * page 1, ligne 74 - page 2, ligne 119; figures 2-5 * | 1, 2, 10 | |
| A | WO-A-8403595 (AYR PTY LTD) <br> * page 4, ligne 12 - page 11, ligne 18; figures 1, 2 * | 1-4 | |
| P | EP-A-0286510 (EQUIPEMENTS ELECTRIQUES MOTORS) <br> * colonne 3, ligne 31 - colonne 9, ligne 37; figures 1, 2 * | 1-10 | DOMAINES TECHNIQUES RECHERCHES (Int. Cl.4 ) <br><br> H02J <br> H02P |

Le présent rapport a été établi pour toutes les revendications

| Lieu de la recherche | Date d'achèvement de la recherche | Examinateur |
|---|---|---|
| LA HAYE | 13 JUIN 1989 | FOURRICHON P.M.L. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03.82 (P0402)